# EUROPEAN PATENT APPLICATION

(11) **EP 2 385 397 A1**
(43) Date of publication of application: **09.11.2011**
(21) Application number: 09839256.6
(22) Date of filing: 01.12.2009
(51) Int. Cl.: G02B 3/00, B29C 33/42, B29C 45/37, G11B 7/135, B29L 11/00

(54) **LENS AND MOLDING DIE**

(30) Priority: 30.01.2009 JP 2009019247
(71) Applicant: Konica Minolta Opto, Inc., Hachioji-shi Tokyo 192-8505 (JP)
(72) Inventor: ITOH Teruhiko, Hachioji-shi Tokyo 192-8505 (JP)
(74) Representative: Henkel, Breuer & Partner
(86) International application number: PCT/JP2009/070160
(87) International publication number: WO 2010/087068

(57) **Abstract**

Provided are a high NA lens having no defects caused when it is molded and a molding die which can be used to mold such a lens. As a lens (OE) has a first end area (OE11b) and, a second end area (OE21b) which does not overlap the first end area when viewed along the optical axis direction, the surface area of a restricted portion which is most restricted in the molding die is reduced, so that the resistance of a resin during an injection molding can be reduced. Consequently, it is possible to prevent the occurrence of striae in a first optical surface (OE11a).

## Description

### TECHNICAL FIELD

The present invention relates to a lens, and especially relates to a lens with NA of 0.75 or more and of 0.9 or less and to a mold for molding the same.

### BACKGROUND ART

In recent years, research and development of a high density optical disc system capable of recording and/or reproducing (hereinafter, "record and/or reproduce" will be referred as "record/reproduce") information by using a blue-violet semiconductor laser with wavelength of about 400 nm are proceeding swiftly. As an example, in the case of an optical disc on which information is recorded/reproduced under the specifications that NA is 0.85 and a light source wavelength is 405 nm, namely, in the case of the so-called Blu-ray Disc (hereinafter, BD), it is possible to record information of 23 to 27 GB per layer for an optical disc with a diameter of 12 cm, which is same in size as DVD (NA is 0.6, wavelength of a light source is 650 nm, and memory capacity is 4.7 GB). This optical disc is referred as a high density optical disc in the present specification.

As an objective lens for use in an optical pickup apparatus for such a high density optical disc, a lens formed by molding resin is disclosed, for example, in Patent Literature 1.

### CITATION LIST

### PATENT LITERATURE

Patent Literature 1: JP-ANo. 2007-334930

### SUWARY OF INVENTION

### TECBMCAL PROBLEM

Herein, an objective lens with NA of 0.8 or more, as disclosed in Patent Literature 1, generally has a thick axial thickness. It elongates an optical path length and increases the size of the optical pickup apparatus, which is a problem. To solve that, a lens can be designed so that the axial thickness becomes as thin as possible, but it shows a trend that the edge thickness of the objective lens becomes thin. The present inventor has studied about the lens with thin edge thickness as described above and found that striae (such as cloudiness and distortion) appear in an optical surface.

The present invention has been achieved in view of the above problems in the prior art, and is aimed to provide a lens such that defects caused in a molding process can be controlled in a high-NA lens and to provide a mold which can mold the lens.

### SOLUTION TO PROBLEM

A lens described in claim 1 is a lens which is formed of a resin material and has NA of 0.75 or more and of 0.9 or less. The lens is characterized by comprising: a first optical surface; a second optical surface formed opposite to the first optical surface; a flange section formed on a periphery of the lens; a first end area formed between the first optical surface and the flange section and is almost perpendicular to an optical axis; and a second end area formed between the second optical surface and the flange section and is almost perpendicular to the optical axis,

wherein a distance along the optical axis between the first end area and the second end area is smaller than a thickness of the flange section along the optical axis, and the first end area and the second end area are not overlapped with each other at all or are partially overlapped with each other when viewed along a direction of the optical axis.

The present inventor has found the followings after his earnest study. Under the assumption that a thickness deviation ratio is a ratio of an edge thickness which is thinnest in a convex lens and an axial thickness of the convex lens, a lens with a large thickness deviation ratio provides a thinner edge thickness in comparison with a cavity capacity of a mold. It increases fluid speed per unit time of resin which passes a gate, and resin is injected in the cavity swiftly. Thereby, striae appear on the optical surface around the gate. Especially in a lens with NA of 0.75 or more, the curvature of the periphery of the optical surface becomes steep. It disturbs fluidness of the resin, and significant striae appear on the optical surface, which can cause a bad appearance and deterioration of optical properties.

Based on the above knowledge, the present inventor has reached the following idea. The lens is configured such that the first end area and the second end area are not overlapped at all with each other or the first end area and the second end area are partially overlapped with each other, when the lens is viewed from the optical axis direction. Thereby, resistance between transfer surfaces of a mold for transfer molding the first end area and the second end area is reduced, to makes resin pass smoothly through there, which can enhance the fluidness of the resin and avoid the striae.

A resin material is not limited as far as it is a material such as transparent thermoplastic resin used as an optical material generally. In view of a processability of an optical element, the material is preferably acrylic resin, cyclic olefin resin, polycarbonate resin, polyester resin, polyether resin, polyamide resin, or polyimide resin. As applicable thermoplastic resin, there can be cited compounds disclosed in, for example, JP-A No. 2003-73559.

It is preferable that an objective lens relating to the present invention includes, in order along a direction perpendicular to the optical axis, an optical surface, end area, and a flange section, and that the distance of the flange section in the optical axis direction is longer than the distance along the optical axis direction between the end areas. Further, it is preferable that a surface at the side of the first optical surface of the flange section is used as a reference surface for being attached to the optical pickup apparatus. Further, the term "partially overlapped" in claim 1 does not involve, for example, the situation that the first end area is shorter than the second end area and the all area of the first end area is overlapped with a part of the second end area. The term "partially overlapped" in claim 1 entirely involves only a situation that a "part" of the first end area (which is not the entire area) and a "part" of the second end area (which is not the entire area) are overlapped together.

A lens described in claim 2 is the lens of claim 1 **characterized in that** an outer circumference of one of the first end area and the second end area is located at a radial outer position relative to an outer circumference of the other. Thereby, the resistance of a space between the transfer surfaces of the mold for transfer molding the first end area and the second end area can be furthermore reduced so that the resin can pass through the space smoothly.

A lens described in claim 3 is the lens of claim 1 or 2 **characterized in that** an inner circumference of the first end surface is located at a radial inner position relative to an outer circumference of the second end surface, or an inner circumference of the second end surface is located at a radial inner position relative to an outer circumference of the first end surface. Therefore, utilizing the difference in their effective radiuses can provide the situation that the first end area and the second end area are not overlapped at all with each other or the situation that the areas are only partially overlapped with each other, without increasing the diameter of the lens.

A lens described in claim 4 is the lens of any one of claims 1 to 3, **characterized in that** a thickness deviation ratio is 3 or more, and 10 or less. The present invention is especially effective in a lens with the thickness deviation ratio being three times or more and being ten times or less. Herein, the "thickness deviation ratio" represents a ratio of the axial thickness and the edge thickness of a lens. The "edge thickness" represents a distance along the optical axis between the first end area and the second end area, and generally represents the minimum thickness in the lens along the optical axis.

A lens described in claim 5 is the lens of any one of claims 1 to 4, **characterized in that** Δ2/Δ1 is 2 or less, where Δ1 is a distance in a direction of the optical axis between the first end area and the second end area and Δ2 is a thickness of the flange section in the direction of the optical axis.

A lens described in claim 6 is the lens of any one of claims 1 to 5, **characterized in that** at least one of end surfaces facing the direction of the optical axis of the flange section is located at an outer position in a direction of the optical axis relative to a surface top of the first optical surface or second optical surface.

Accordingly, one of the end surfaces facing the optical axis direction of the flange section may be located at a closer position to the inner side along the optical axis direction in comparison with the surface top of the first optical surface or the second optical surface.

A mold described in claim 7 is a mold characterized by forming the lens of any one of clams 1 to 6 and comprising transfer surfaces for transferring the first optical surface, the second optical surface, the first end area, the second end area, and a surface of the flange section.

### ADVANTAGEOUS EFFECTS OF INTNTION

According to the present invention, there can be provided a lens such that defects caused in a molding process can be controlled in a high-NA lens, and a mold which can mold the lens.

### BRIEF DESCRIPTION OF DRAWLNGS

Fig. 1 is a diagram showing steps of molding a lens relating to the present invention with a mold.
Fig. 2 is an enlarged view of the mold.
Fig. 3 is a sectional view of lens OE' as a comparative example.
Fig. 4 shows lens OE of the present embodiment, molded with the above mold.
Fig. 5 shows a sectional view of lens OE relating to another embodiment
Fig. 6 shows a sectional view of lens OE relating to another embodiment.

### DESCRIPTION OF EMBODIMENTS

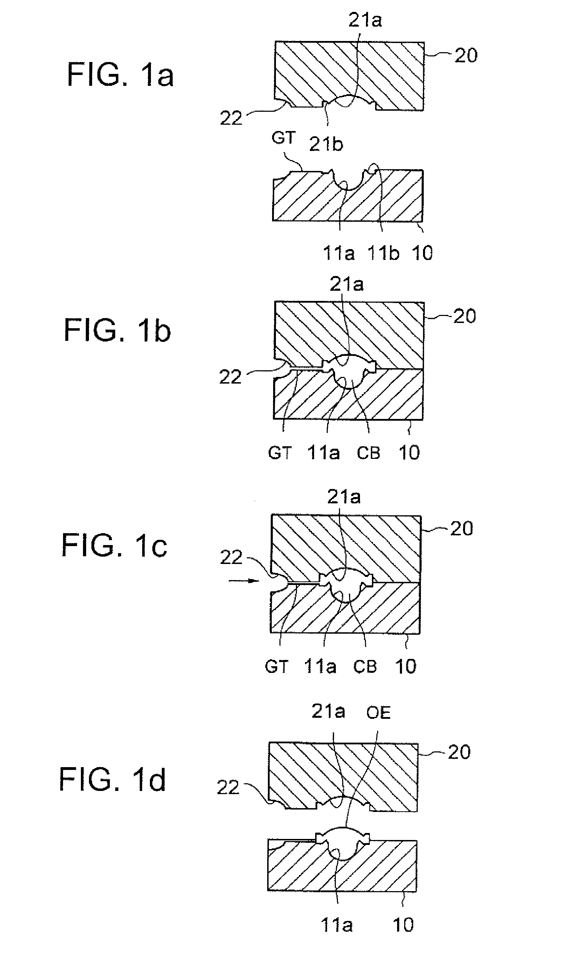

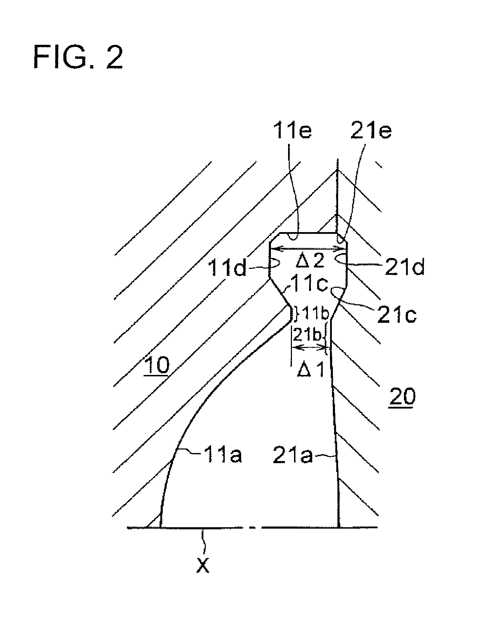

Hereinafter, the present invention will be described with referring to the drawings. Fig. 1 is a diagram showing steps of molding a lens with a mold, where the lens is used for an optical pickup apparatus for a BD and has NA being 0.75 or more and being 0.9 or less. Fig. 2 is an enlarged view of the mold. The mold includes first mold 10 and second mould 20 and forms plural cavities under the condition that those are clamped. The form of the cavities in Fig. 1 is roughly illustrated.

As shown in Fig. 2, on first mold 10, there are provided, around central axis X as the center: first optical transfer surface 11a for transfer molding of a first optical surface of the lens; first area transfer surface 11b for transfer molding of a first end surface, located at the next position to the first optical transfer surface; first transition-area transfer surface 11c for transfer molding of a first transition area, located at the next position to the first area transfer surface; first flange-end transfer surface 11d for transfer molding of a first end surface of the flange section, located at the next position to the first transition-area transfer surface; and first flange-circumference transfer surface 11e for transfer molding of a circumference surface of the flange section, located to be perpendicular to the first flange-end transfer surface. First mold 10 includes plural respective transfer surfaces. First area transfer surface 11b and first flange-end transfer surface 11d are perpendicular to central axis X (optical axis of the lens) of first optical transfer surface 11a. First transition-area transfer surface 11c inclines from a plane perpendicular to central axis X. It is preferable that a chamfered section is arranged at the intersection of first flange-end transfer surface 11d and first flange-circumference transfer surface 11e.

On second mold 20, there are provided, around central axis X as the center second optical transfer surface 21a for transfer molding of a second optical surface of the lens; second area transfer surface 21b for transfer molding of a second end surface, located at the next position to the second optical transfer surface; second transition-area transfer surface 21c for transfer molding of a second transition area, located at the next position to the second area transfer surface; second flange-end transfer surface 21d for transfer molding of a second end surface of the flange section, located at the next position to the second transition-area transfer surface; and second flange-circumference transfer surface 21e for transfer molding of a circumference surface of the flange section, located to be perpendicular to the second flange-end transfer surface. Second mold 20 includes plural respective transfer surfaces. Second area transfer surface 21b and second flange-end transfer surface 21d are perpendicular to central axis X (optical axis of the lens) of a second optical transfer surface 21a Second transition-area transfer surface 21c inclines from a plane perpendicular to central axis X. The length of first flange-circumference surface 11e along the optical axis is longer than the length of the second flange-circumference surface 21e along the optical axis. The both surfaces can be formed in conical surfaces slightly inclining from central axis X to the opposing directions, respectively, in view of draft angles.

It is also preferable that a chamfered section is arranged at the intersection of second flange-end transfer surface 21d and second flange-circumference surface 21e.

When viewed along central axis X, first area transfer surface 11b and second area transfer surface 21b are not overlapped with each other, and distance Δ1 of those surfaces along the central axis X is smaller than distance Δ2 between first flange-end transfer surface 11d and second flange-end transfer surface 21d. Each of first transition-area transfer surface 11c and second transition-area transfer surface 21c inclines from a plane perpendicular to central axis X to the opposite direction from the other.

As shown in Fig. 1, gate (entrance channel) GT is formed on first mold 10.

Next, a molding method of a lens will be described. First, first mold 10 is set with facing second mold 20, as shown in Fig. 1a. After that, as shown in Fig. 1b, first mold 10 is located to approach and come in contact with second mold 20 relatively, and mold clamping is carried out with a predetermined pressure being kept At this time, butting end sections of first flange-cireumfcrence transfer surface 11e and opposing second flange-circumference transfer surface 21e coincide with each other.

After first mold 10 and second mold 20 are heated by a heater which is not illustrated such that optical transfer surfaces 11a and 21a reach a predetermined temperature at the time of mold clamping, resin is fed through runner 22 and gate GT from a nozzle which is not illustrated, by applying arbitral pressure (See Fig. 1c). At this time, the air left in cavity CB escapes through an air vent which is not illustrated. Therefore, it prevents the air from being trapped in cavity CB and allows the resin come in contact with the transfer surfaces tightly with accuracy.

Next, after molten resin is solidified with shapes of transfer surfaces 11a to 11e and 21a to 21e being transferred thereon, the mold temperature is decreased to cool and solidify the resin.

After that, when first mold 10 and second mold 20 are relatively moved to carry out mold opening, a molded body including lens OE is exposed with sticking to first mold 10. By separating lens OE from such the molded body, lens OE as a single body is formed.

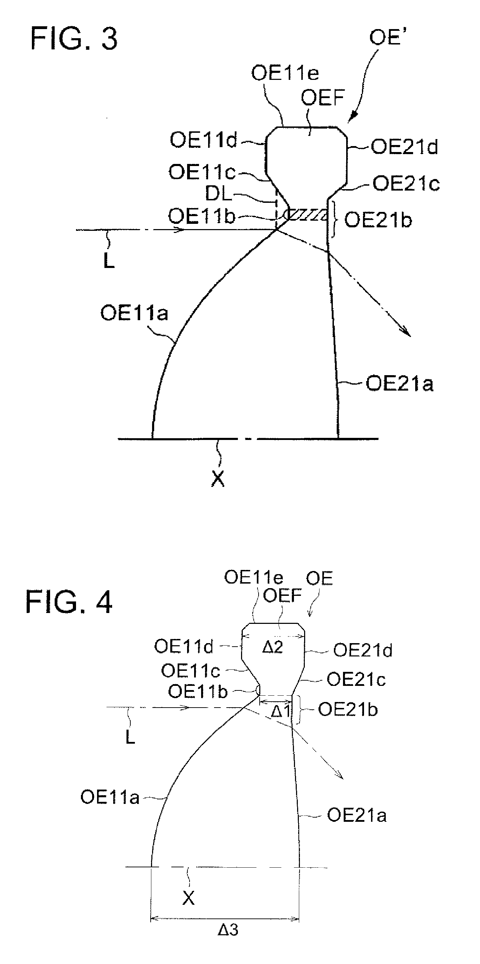

The lens of the present embodiment will be described, compared with a comparable example. Fig. 3 is a sectional view showing lens OE' of a comparative example and Fig. 4 is a sectional view showing lens OE of the present embodiment molded with the above-described mold Outer edge L of a light flux passing a position which is inside the effective aperture and is closest to the effective aperture is represented by a dashed line. In other words, an intersection of outer edge L of a light flux and each of first optical surface 11a lea and second optical surface 11b is an effective aperture.

In Fig. 4, lens OE is provided around optical axis X as its center and includes first optical surface OE11a which includes optical axis X and has a round shape, first end area OE11b which is located next to the first optical surface and has a ringed shape, first transition area OE11c which is located next to the first end area and has a ringed shape, first end surface OE11d of flange section OEF which is located next to the first transition area, is positioned at the outermost position and has a ringed shape, and circumference surface OE11e of flange section OEF which is perpendicular to the first end surface of the flange section. Lens OE further includes second optical surface OE21a which faces first optical surface OE11a concentrically and has a round shape, second end area OE21b which is located next to the second optical surface and has a ringed shape, second transition area OE21c which is located next to the second end area and has a ringed shape, and second end surface OE21d of flange section OEF which is located next to the second transition area and has a ringed shape. When it is attached to an optical pickup device which is not illustrated, first optical surface OE11a faces a light source and second optical surface OE21a a faces an optical disc.

In lens OE shown in Fig. 4, when it is viewed from a position along the optical axis, first end area OE11b and second end area OE21b are not overlapped with each other. Especially, by using a difference of effective apertures at the side of first optical surface 11a and the side of second optical surface 21a, first end area 11b is located at an outer position in the direction perpendicular to the optical axis relative to second end area OE21b. Accordingly, the inner circumference of second end area OE21b is located at a position closer to the optical axis than the outer circumference of first optical surface OE11a. The distance (Δ1) of the both surfaces in the optical axis direction is smaller than the distance (Δ2) of end surfaces OE11d and OE21d of flange section OEF, and Δ2/Δ1≤2 is preferably satisfied. Additionally, when the axial thickness of lens OF is represented by Δ3, it is preferable that thickness deviation ratio Δ3/Δ1 is 3 or more and is 10 or less. Further, end surface OE11d of flange section OEF is located at a position closer to second optical surface OE21a than an intersection of first optical surface OE11a and optical axis X, but end surface OE21d of flange section OEF is located at a position farther from first optical surface OE11a than an intersection of second optical surface 21a and optical axis X. Accordingly, first optical surface OE11a protrudes more than first end surface OE11d, and it does not allow first end surface OE11d to come in contact with a flat surface. However, since second optical surface OE21a is recessed in comparison with second end surface OE21d, lens OE can be put on a plane so as to make the entire of second end surFace in contact with the plane, which avoids second optical surface OE21a from being damaged. However, when a member on which lens OE is put has a shape that the center is concaved so as not to come in contact with second optical surface OE21a and that just second end surface OE21d can be in contact with the member, second end surface OE21d may be located at an inner position in the optical axis direction relative to second optical surface OE21a.

Alternatively, the lens may have a shape that first optical surface OE11a is recessed relative to first end surface OE11d and second optical surface OE21a protrudes more than second end surface OE21d, or a shape that both first optical surface OE11a and second optical surface OE21a are recessed relative to first end surface OE11d and second end surface OE21d, respectively.

On the other hand, lens OE' of a comparative example in Fig. 3 has a different shape only in a point that, when viewed along the optical axis, first end area OE11b is fully overlapped with second end area OE21b. The overlapped area is shown by hatching.

Herein, lens OE' shown in Fig. 3 has a probability that resin fed through a sprue and runner in a injection molding process receives large resistance when the resin passes through an area between transfer surfaces of first end area OE11b and second and area OE21b which are parallel and overlapped with each other in the optical axis direction, and that it causes striae on first optical surface OE11a, To avoid that, it can be considered to broaden the area between the transfer surfaces of first end area OE11b and second and area OE21b to make the fluidness of the resin in the injection molding smooth, as shown by dotted line DL in Fig. 3. However, it causes a probability that the transfer surface interferes with first optical surface OE11a and the optical properties are damaged.

On the other hand, according to lens OE of the present embodiment, when viewed along the optical axis, first end area OE11b and second end area OE12b are not overlapped with each other. Therefore, an area of a narrow section which is narrowest in the mold is reduced and the resistance of the resin in the injection molding can be reduced, which controls a generation of striae on first optical surface OE11a.

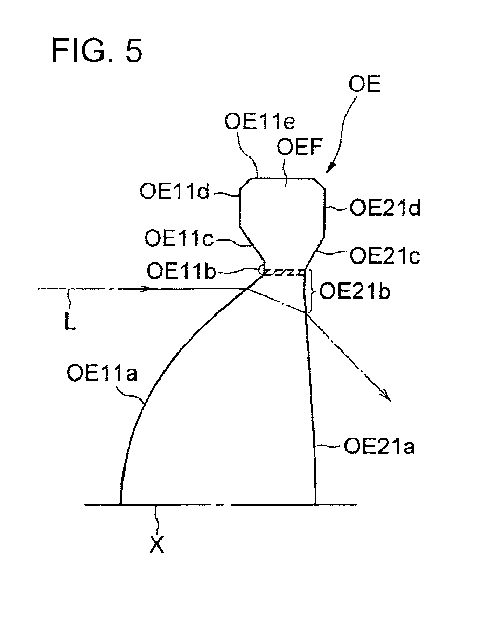

Fig. 5 is a sectional view of lens OE relating to another embodiment In the present embodiment, first end area OE11b and second end area OE21b are partially overlapped with each other when they are viewed along the optical axis. Especially, by using the difference of effective apertures at the side of first optical surface OE11a and at the side of second optical surface OE21a, the outer circumference of second end area OE21b is made larger than the inner circumference of first end area OE11b and is made smaller than the outer circumference of that. The overlapped area is represented by hatching. Also in the present embodiment, an area of a narrow section that is narrowest in the mold is reduced and the resistance of the resin in the injection molding can be reduced, which controls a generation of striae on first optical surface OE11a. The other constructions are same as the above described embodiment and the description is omitted.

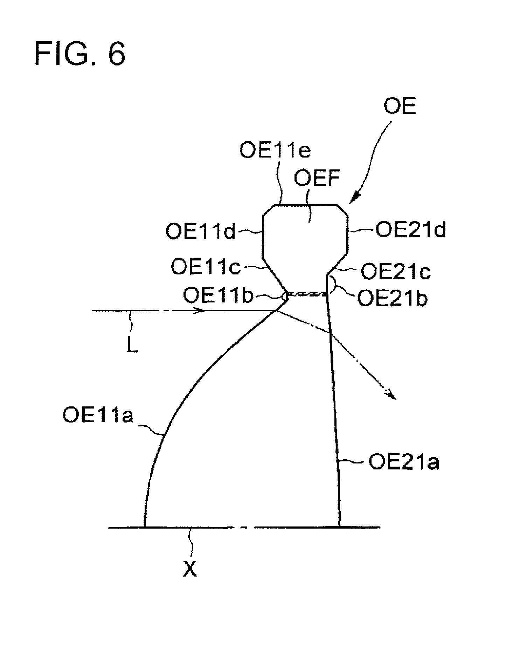

Fig. 6 is a sectional view of lens OE relating to still another embodiment. In the present embodiment, first end area OE11b and second end area OE21b are partially overlapped with each other when they are viewed along the optical axis. Especially, the outer circumference of first end area OE11b is made larger than the inner circumference of second end area OE21b and is made smaller than the outer circumference of that. The overlapped area is represented by hatching. Also in the present embodiment, an area of a narrow section that is narrowest in the mold is reduced and the resistance of the resin in the injection molding can be reduced, which controls a generation of striae on first optical surface OE11a. The other constructions are same as the above described embodiment and the description is omitted.

The present invention has been described above, but the scope of the present invention is to be understood that changes and variations may be made properly without being limited in the above embodiments.

### CITATION LIST

- 10: First mold
- 11a: First optical transfer surface
- 11b: First area transfer surface
- 11c: First transition-area transfer surface
- 11d: First flange-end transfer surface
- 11e: First flange-circumference transfer surface
- 20: Second mold
- 21a: Second optical transfer surface
- 21b: Second flange transfer surface
- 21b: Second area transfer surface,
- 21c: Second transition-area transfer surface
- 21d: Second flange-end transfer surface
- 21e: Second flange-circumfcrence transfer surface
- 22: Runner
- CB: Cavity
- DL: Dotted line
- L: Outer edge
- OE: Lens
- OE11a: First optical surface
- OE11b: First end area
- OE11c: First transition area
- OE11d: First end surface
- OE11: e Circumference surface of flange section
- OE21a a: Second optical surface
- OE21b: Second end area
- OE21c: Second transition area
- OE21d: Second end surface
- OEF: Flange section
- X: Center axis (Optical axis)
- GT: Gate

## Claims

1. A lens which is formed of a resin material and has NA of 0.75 or more and of 0.9 or less, the lens **characterized by** comprising:
a first optical surface;
a second optical surface formed opposite to the first optical surface;
a flange section formed on a periphery of the lens;
a first end area formed between the first optical surface and the flange section and is almost perpendicular to an optical axis; and
a second end area formed between the second optical surface and the flange section and is almost perpendicular to the optical axis,
wherein a distance along the optical axis between the first end area and the second end area is smaller than a thickness of the flange section along the optical axis, and
the first end area and the second end area are not overlapped with each other at all or are partially overlapped with each other when viewed along a direction of the optical axis.

2. The lens of claim 1 **characterized in that**
an outer circumference of one of the first end area and the second end area is located at a radial outer position relative to an outer circumference of the other.

3. The lens of claim 1 or 2 **characterized in that**
an inner circumference of the first end surface is located at a radial inner position relative to an outer circumference of the second end surface, or
an inner circumference of the second end surface is located at a radial inner position relative to an outer circumference of the first end surface.

4. The lens of any one of claims 1 to 3, **characterized in that**
a thickness deviation ratio is 3 or more, and 10 or less.

5. The lens ofany one of claims 1 to 4, **characterized in that**
Δ2/Δ1 is 2 or less, where Δ1 is a distance in a direction of the optical axis between the first end area and the second end area and Δ2 is a thickness of the flange section in the direction of the optical axis.

6. The lens of any one of claims 1 to 5, **characterized in that**
at least one of end surfaces facing the direction of the optical axis of the flange section is located at an outer position in a direction of the optical axis relative to a surface top of the first optical surface or second optical surface.

7. A mold **characterized by** forming the lens of any one of clams 1 to 6 and comprising transfer surfaces for transferring the first optical surface, the second optical surface, the first end area, the second end area, and a surface of the flange section.
